Europäisches Patentamt

**European Patent Office**

**Office européen des brevets**

(19)

(11) Publication number: **0 183 495**
**A1**

# (12) EUROPEAN PATENT APPLICATION

(21) Application number: **85308502.5**

(22) Date of filing: **22.11.85**

(51) Int. Cl.⁴: **C 08 J 3/14**
**C 08 L 33/06**

(30) Priority: **22.11.84 GB 8429519**

(43) Date of publication of application:
**04.06.86 Bulletin 86/23**

(84) Designated Contracting States:
**CH DE FR GB IT LI NL**

(71) Applicant: **BP Chemicals Limited**
**Belgrave House 76 Buckingham Palace Road**
**London, SW1W 0SU(GB)**

(72) Inventor: **McMahon, John**
**BP Chemicals Limited Hayes Road Sully**
**Penarth South Glamorgan CP6 2YU(GB)**

(74) Representative: **Krishnan, Suryanarayana**
**Kalyana et al,**
**BP INTERNATIONAL LIMITED Patents Division Chertsey**
**Road**
**Sunbury-on-Thames Middlesex TW16 7LN(GB)**

(54) **Pressure sensitive adhesives.**

(57) This invention relates to a pressure sensitive adhesive composition and a process for producing the same. The adhesive contains a vinyl monomer, an acrylate monomer, an alpha, beta-unsaturated monocarboxylic acid and a chelated metal alkoxide cross-linking agent. The adhesives of this invention retain their adhesive strength over a relatively long duration and can be supplied as a solution without loss of tackiness, peel or shear strength.

EP 0 183 495 A1

Croydon Printing Company Ltd

1

## PRESSURE SENSITIVE ADHESIVES

The present invention relates to pressure sensitive adhesive compositions and a process for producing the same.

Pressure sensitive adhesives (PSA) are normally tacky compositions which adhere to a substrate in contact therewith upon application of light pressure. Such PSA can be used widely with a range of materials on an industrial scale provided that PSA possess a combination of characteristics including good tackiness, adhesion and cohesive strength, and ability to adhere to different types of surfaces. It is also important for the PSA to retain their adhesive strength over a relatively long duration. PSA must be supplied in a form, such as a solution, which enables the formation of a thin film without adversely affecting its tackiness, peel and shear strength.

It has now been found that a composition capable of meeting substantially all these features can be formulated by a suitable choice of interpolymerisable components.

Accordingly, the present invention is a PSA composition comprising:

(A) a non-aqueous solution of an interpolymer of

(a) 0-65% w/w of at least one vinyl monomer having a glass transition temperature greater than 0°C and selected from vinyl chloride, vinylidene chloride, vinyl acetate, styrene and acrylonitrile,

(b) at least 30% w/w of one or more acrylate monomers, and

(c) from 4-10% w/w of an alpha, beta-unsaturated monocarboxylic acid, and

1

(B) a chelated metal alkoxide as a cross-linking agent.

The vinyl monomer (a) is the so called 'hard monomer' in the composition and preferably has a glass transition temperature above 50°C. Vinyl acetate is preferred although other monomers such as vinyl chloride, styrene, vinylidene chloride and acrylonitrile or combinations of these may also be used.

The acrylate monomer (b) forms the major essential constituent of the interpolymer and is suitably an ester of an alcohol having up to 20 carbon atoms and acrylic acid or methacrylic acid. Thus they are essentially alkyl acrylates preferably having 4-10 carbon atoms in the alkyl group. Specific examples of such acrylates include butyl acrylate, amyl acrylate, hexyl acrylate, heptyl acrylate, octyl acrylate, nonyl acrylate, decyl acrylate and isomers thereof. Functional alkyl acrylates such as hydroxyethyl methacrylate or dimethyl aminoethyl methacrylate may also be used. Mixtures of one or more of these esters may be used as the acrylate monomer (b). Of these, an isomer of octyl acrylate i.e. 2-ethyl hexyl acrylate is most preferred.

The amount of the acrylate (b) present in the interpolymer is suitably from 30-96% w/w, preferably from 50-85% w/w of the polymer composition.

The alpha, beta-unsaturated monocarboxylic component (c) in the interpolymer is suitably acrylic acid or methacrylic acid, preferably acrylic acid. The unsaturated monocarboxylic acid is present in an amount from 4-10% w/w, suitably from 4-6% w/w, of the polymer composition.

Components (a) to (c) in the composition form the tacky interpolymers of the PSA. The interpolymerisation of components (a)-(c) can be achieved by using a conventional initiator e.g. a peroxide, suitably lauroyl peroxide. The interpolymerisation is preferably carried out in a non-aqueous polar or non-polar solvent or mixture of solvents e.g. ethyl acetate, toluene, heptane etc.

The interpolymerisation is suitably carried out by charging a reaction vessel at moderately elevated temperatures with the non-aqueous solvent and then adding to the vessel in a stepwise manner over a period the peroxide initiator dissolved in a mixture of the components (a), (b) and (c). When the addition of the initiator/monomer mix is completed, the reaction mixture is maintained at the elevated temperature for a further duration until a solution of the interpolymer having the desired viscosity is obtained. The molecular weight of the polymer composition may be regulated by the addition of a small amount (typically 0.01-2% w/w) of a chain transfer agent which is a mercaptan such as t-dodecyl mercaptan and/or a difunctional monomer which contains at least two carbon-carbon double bonds such as divinyl benzene or hexane diol di(meth)acrylate to the reaction mixture during polymerisation. Examples of the diol di(meth)acrylates include those of diethylene glycol, triethylene glycol and tetraethylene glycol.

The solution of the adhesive interpolymer so formed is then mixed with a chelated metal alkoxide to form the PSA solution. The metal alkoxides serve to enhance the performance of the interpolymer by crosslinking in the adhesive film and the chelating agent improves the storage stability of the interpolymer solution by reducing its tendency to gel.

The metal alkoxide used to form the chelate suitably has a formula $R_nM(OR')_m$, wherein M is a metal selected from the group consisting of Groups II, III, IV and V of the Periodic Table; R is an alkyl radical having 1 to 8 carbon atoms or an aryl group having 6 to 16 carbon atoms; R' is an alkyl or an aralkyl group e.g. benzyl having 1 to 18 carbon atoms; n is zero or an integer and m is an integer with a value of at least 2 such that the sum of n + m is equal to the valence of the metal M. Specific examples of the alkoxides that may be used include the ethoxide, isopropoxide or tert-butoxide of at least one metal selected from magnesium, calcium, strontium, barium, zinc, aluminium, germanium, tin, lanthanum, cerium, titanium, zirconium, hafnium, vanadium, riobium, chromium, iron, cobalt and nickel. The alkoxides may also be double metal alkoxides e.g. sodium zirconium isopropoxide, magnesium aluminium ethoxide or alkyl metal alkoxides e.g. diethoxy ethyl aluminium or dimethyl diisopropoxytitanium.

4

The metal alkoxides, double metal alkoxides or alkyl metal alkoxides have to be chelated in order to minimise gelation during storage. Examples of chelating agents that may be used are compounds containing electron donating atoms e.g. oxygen or nitrogen and which are capable of forming coordinate bonds with the metal atoms in the alkoxide. Specific examples of such compounds are glycols, alkanolamines, hydroxy acids, ketoesters, dialdehydes and diketones. Of these 2,4-pentanedione and ethylacetylacetone are most preferred. It is preferable to have an excess of the chelating agent in the PSA. A typical cross-linking agent is a mixture of aluminium isobutoxide and aluminium triethylacetoacetate.

The amount of chelated metal alkoxide employed is suitably from 0.01 - 5% w/w based on the interpolymer.

The PSA composition may optionally contain in addition auxiliary additives capable of promoting the properties desired in the composition. For instance, the composition may contain additional stabilizers such as acetylacetone, moisture scavengers or stabilizers such as trimethylorthoformate and adhesion promoters such as an organosilane containing functional groups, e.g. ureidoalkyltriethoxysilane.

The PSA compositions of the present invention may be used in various forms. For instance it can be cast as a free film placed between sheets of paper used in transfer operation. It can also be coated onto substrates to provide adhesive coated substrates. Additional solvents may be used to obtain a PSA composition which has a viscosity adequate to achieve formation of thin films by roller or knife coatings. The substrates that may be coated either directly or by release and transfer coating include tapes, sheets, panels, cellophane, vinyls, cloth, rubber, various laminates and other flexible materials. Rigid materials e.g. badges may also be coated.

The dried adhesive compositions forms an adherent tacky layer or film on the coated material and provides a bond of high cohesive strength.

The present invention is further illustrated with reference to the following Example.

4

Example

Preparation

| Reagents | | | Parts |
|---|---|---|---|
| A | | Ethyl Acetate | 152 |
| B | | (Vinyl acetate | 36.7 |
| | | (2 ethyl hexylacrylate | 179.3 |
| | | (Acrylic acid | 10.8 |
| | | (Lauroyl peroxide | 0.54 |
| | | (t-dodecyl mercaptan | 0.14 |
| C | | Lauroyl peroxide | 0.54 |

Procedure

Reagent A was charged to a reaction vessel equipped with condenser, agitator and nitrogen purge. This was heated to 76–78°C and the reagent mixture B added over a three hour period while maintaining reactor temperature. Reagent C was charged stepwise over a thirty minute period commencing thirty minutes after the completion of B addition. Reaction temperature was maintained at 76 – 78°C throughout this procedure and for a further two hours to give an interpolymer solution of 56.6% solids with a viscosity of 6600 cPs.

The composition of the interpolymer formed was as follows:

| Vinyl acetate | 16.2% |
| 2 ethylhexylacrylate | 79.0% |
| Acrylic acid | 4.8% |

This interpolymer solution was formulated as shown in the following table to give the pressure sensitive adhesive solution:

| Interpolymer solution | 100 | parts |
| Chelated aluminium alkoxide | 0.35 | " |
| Alusec 588* (solution in isobutanol) | | |
| Acetyl acetone | 1.0 | " |
| Trimethylorthoformate | 1.0 | " |
| Organosilane (ureido alkyl triethoxy silane) | 1.0 | " |
| Ethyl acetate | 9.0 | " |

*Registered Trade Mark

The pressure sensitive adhesive solution formulated as above was then coated onto a release paper and the solvent driven off at 95°C to form a pressure sensitive adhesive film which exhibited a peel strength of 18.5N per 25 mm width when tested between polyester film and aluminium foil.

Claims:

1. A pressure sensitive adhesive composition comprising:

(A) a non-aqueous solution of an interpolymer of

(a) 0-65% w/w of at least one vinyl monomer having a glass transition temperature greater than 0°C and selected from vinyl chloride, vinylidene chloride, vinyl acetate and acrylonitrile,

(b) at least 30% w/w of one or more acrylate monomers, and

(c) from 4-10% w/w of an alpha, beta-unsaturated monocarboxylic acid, and

(B) a chelated metal alkoxide as a cross-linking agent.

2. A composition according to claim 1 wherein the vinyl monomer (a) has a glass transition temperature above 50°C.

3. A composition according to claim 1 or 2 wherein the acrylate monomer (b) is an ester of an alcohol having up to 20 carbon atoms and acrylic acid or methacrylic acid.

4. A composition according to claim 1 wherein the acrylate monomer (b) is an alkyl acrylate having 4-10 carbon atoms in the alkyl group.

5. A composition according to any one of the preceding claims wherein the amount of the acrylate monomer (b) present in the interpolymer is from 50-85% w/w of the polymer composition.

6. A composition according to any one of the preceding claims wherein the alpha, beta-unsaturated monocarboxylic component (c) in the interpolymer is acrylic acid or methacrylic acid.

7

7. A composition according to any one of the preceding claims wherein the alpha beta-unsaturated monocarboxylic acid is present in an amount from 4-6% w/w of the polymer composition.

8. A process according to any one of the preceding claims wherein the metal alkoxide used to form the chelate has a formula $R_nM(OR')_m$, wherein M is a metal selected from the group consisting of Groups II, III, IV and V of the Periodic Table; R is an alkyl radical having 1 to 8 carbon atoms or an aryl group having 6 to 16 carbon atoms; R' is an alkyl or an aralkyl group e.g. benzyl having 1 to 18 carbon atoms; n is zero or an integer and m is an integer with a value of at least 2 such that the sum of n + m is equal to the valence of the metal M.

9. A process according to any one of the preceding claims wherein the metal alkoxide used to form the chelate is selected from the ethoxide, isopropoxide and tert-butoxide of at least one metal selected from magnesium, calcium, strontium, barium, zinc, aluminium, germanium, tin, lanthanum, cerium, titanium, zirconium, hafnium, vanadium, riobium, chromium, iron, cobalt and nickel.

10. A process according to any one of the preceding claims wherein the chelating agents for the metal alkoxides are compounds containing electron donating atoms selected from oxygen and nitrogen and which are capable of forming coordinate bonds with the metal atoms in the alkoxide.

11. A process according to claim 1 wherein the chelating agents are selected from glycols, alkanolamines, hydroxy acids, ketoesters, dialdehydes and diketones.

12. A process according to any one of the preceding claims wherein the cross-linking agent is a mixture of aluminium isobutoxide and aluminium triethylacetoacetate.

13. A process according to any one of the preceding claims wherein the amount of chelated metal alkoxide employed is from 0.01 - 5% w/w based on the interpolymer.

14. A process according to any one of the preceding claims wherein the pressure sensitive adhesive composition contains in addition an organosilane adhesion promoter.

15. A process according to any one of the preceding claims wherein the PSA polymer composition molecular weight distribution is controlled by addition to the polymerisation of 0.01-2% w/w of a mercaptan and/or a monomer containing at least two reactive carbon-carbon double bonds.

European Patent
Office

**EUROPEAN SEARCH REPORT**

0183495
Application number

EP 85 30 8502

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | US-A-4 360 638 (B. BARTMAN) * Claims; examples; column 5, line 26 - column 6, line 17 * | 1-15 | C 09 J 3/14 C 08 L 33/06 |
| X | CHEMICAL ABSTRACTS, vol. 80, 1974, page 32, no. 37871n, Columbus, Ohio, US; & JP - A - 73 14 172 (SONY CORP.) 04-05-1973 * Abstract * | 1-15 | |

TECHNICAL FIELDS SEARCHED (Int Cl.4)

C 09 J 3/14
C 08 L 33/06

The present search report has been drawn up for all claims

| Place of search | Date of completion of the search | Examiner |
|---|---|---|
| THE HAGUE | 18-02-1986 | FOUQUIER J.P. |